# EUROPEAN PATENT APPLICATION

(11) **EP 1 788 570 A1**
(43) Date of publication of application: **23.05.2007**
(21) Application number: 05780938.6
(22) Date of filing: 25.08.2005
(51) Int. Cl.: G11B 27/00

(54) **RECORDING MEDIUM, RECORDING DEVICE, RECORDING METHOD, DATA OUTPUTTING DEVICE, DATA OUTPUTTING METHOD, AND DATA DISTRIBUTING/CIRCULATING SYSTEM**

(30) Priority: 10.09.2004 JP 2004264341; 16.02.2005 JP 2005038582
(71) Applicant: SONY CORPORATION, Minato-ku Tokyo (JP)
(72) Inventor: SAKO, Yoichiro, c/o Sony Corp., Tokyo (JP); TERAUCHI, Toshiro, c/o Sony Corp., Tokyo (JP); MIYAJIMA, Yasushi, c/o Sony Corp., Tokyo (JP); YAMASHITA, Kosei, c/o Sony Corp., Tokyo (JP); TAKAI, Motoyuki, c/o Sony Corp., Tokyo (JP); SASAKI, Toru, c/o Sony Corp., Tokyo (JP); SAKAI, Yuichi, c/o Sony Corp., Tokyo (JP); INOUE, Makoto, c/o Sony Corp., Tokyo (JP); ASUKAI, Masamichi, c/o Sony Corp., Tokyo (JP)
(74) Representative: Merryweather, Colin Henry
(86) International application number: PCT/JP2005/015414
(87) International publication number: WO 2006/027957

(57) **Abstract**

It is made possible to appreciate a material such as a single musical composition, a single video, and the like in various states. There is provided an optical head 31 for reading out contents data such as a musical composition, a video, and the like, metadata for arranging the contents data, and information for specifying the contents data from a CD-R 11 to which they are recorded. There is provided a circuit 35 for outputting the contents data read out by the optical head and data arranged by the metadata together.

## Description

### Technical Field

The present invention relates to a recording medium, a recording apparatus, a recording method, a data output apparatus, a data output method, and data delivery/distribution system of contents data.

### Background Art

As digital AV (Audio and Visual) equipment has become widespread, commercial contents (contents to be released, professional contents) such as musics, videos, and the like are released and as CDs (Compact Discs) and DVDs. Further, various types of contents are released and distributed through networks Further, as ADSL (Asymmetric Digital Subscriber Line), FTTH (Fiber To The Home), and the like have become wide spread, a P2P (Peer to Peer) system making use of the Internet is actually employed.

Note that there are, for example, Japanese Unexamined Patent Application Publication Nos. 2002-236768 and 2003-114949 as prior art documents.

However, even if a user, who buys, for example, a music CD or gets it through electronic distribution, wants to enjoy it by subjecting the original music contents of the CD to equalizing and the like to modify the sound quality of the contents for personal use, since it is difficult to modify the melody and the like of the contents individually, a user who can carry out such modification is limited only to a maniac user and an ordinary user cannot easily enjoy the contents in such a manner. Further, copy right must be also taken into consideration.

The present invention intends to solve the above problem.

### Disclosure of the Invention

In the present invention, there is provided a recording medium which is characterized in that identification data for specifying contents data and metadata for modifying the contents data are recorded in correspondence to each other.

Further, in the present invention, there is provided a data delivery/distribution system, wherein information for specifying predetermined contents data and metadata for the contents data are delivered or distributed together.

According to the present invention, materials themselves (contents data) such as musics, videos, and the like can be enjoyed as well as a result of arrangement to the materials can be also enjoyed. Further, when information that provides the result of arrangement is furnished to friends and the like, they can also enjoy the result of the arrangement. Otherwise, it is also possible to prepare a server and to distribute information for providing the result of arrangement through a portal service and to delivery it through P2P, thereby the materials can be variously enjoyed because users actively get engaged with them.

Moreover, the information for providing the result of arrangement has a meaning only when a user making use of it prepares a material, which makes a great advancement in copy right as well as can contribute to turnover.

### Brief Description of the Drawing

Fig. 1 is a view showing an example a recording mode in the present invention.
Fig. 2 is a view showing an example a data format in the present invention.
Fig. 3 is a view showing other example the recording mode in the present invention.
Fig. 4 is a system view showing an example a recording apparatus according to the present invention.
Fig. 5 is a system view showing an example a replay apparatus according to the present invention.
Fig. 6 is a system view showing other example of the recording apparatus according to the present invention.
Fig. 7 is a system view showing other example the recording apparatus according to the present invention.
Fig. 8 is a system view showing other example the replay apparatus according to the present invention.
Fig. 9 is a flowchart showing an example a replay procedure in the present invention.
Fig. 10 is a system view showing an example of a server system according to the present invention.
Fig. 11 is a flowchart showing other example of the replay procedure in the present invention.
Fig. 12 is a system view showing other example of the server system according to the present invention.
Fig. 13 is a view showing other example the data format in the present invention.

### Best Mode for Carrying Out the Invention

### [1] Recorded Contents in Recording Medium

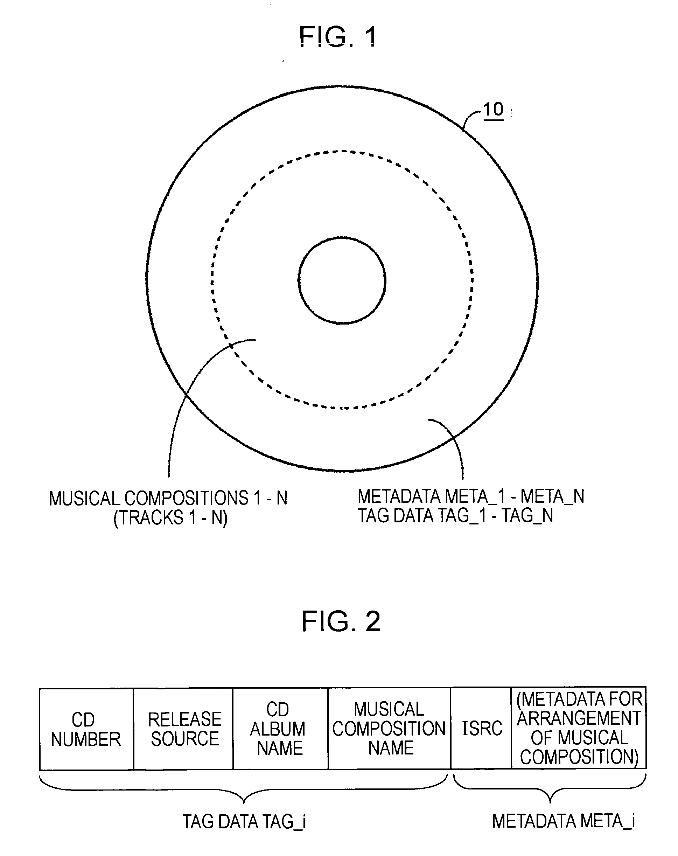

Fig. 1 shows an example of recorded contents and a recording mode when a CD is used as a recording medium and musical compositions are recorded to the CD as contents data.

That is, in the example shown in Fig. 1, a CD 10 is arranged in CD Extra mode, and the digital audio data (uncompressed digital audio data) of a plurality of musical compositions 1 - N are recoded to a first session of the CD 10 as tracks 1 - N. In this case, the digital audio data in the tracks 1 - N are recorded in a format similar to that of musical compositions in an ordinary CD-DA (CD Digital Audio).

Further, N sets of metadata META_1 to META_N and N sets of tag data TAG_1 to TAG_N are recorded to a second session of the CD 10. In this case, metadata Mi is data for providing a corresponding musical composition (track) i with a variation (for arranging it), and, when, for example, a backing is added to the musical composition i by a guitar, the metadata Mi is data for creating digital audio data for the backing by the guitar.

Accordingly, the metadata Mi may be digital audio data of a difference between the digital audio data of the musical composition i and digital audio data as a result of arrangement of the musical composition. Further, the metadata Mi may be data for providing the time-axis, the frequency-axis or the level of the musical composition i with a variation, that is, data for modifying tempo, pitch, volume, and the like. Furthermore, it may be the arrangement information of the musical composition i, that is, time information showing the beginning of each battuta, chord information of each battuta, and the like. Then, the metadata Mi includes synchronous data so as to be in synchronism with the musical composition i or address data showing corresponding positions of the musical composition.

Further, tag data TAG_1 to TAG_N are information for causing each of the tracks (musical compositions) 1 - N recorded to the first session to correspond to each of the metadata META_1 to META_N or for relating them to each other. That is, the tag data TAG_1 to TAG_N are information for specifying which of the metadata META_1 to META_N corresponds to each of the musical composition 1 - N.

For this purpose, tag data TAG_i (i=1-N) includes data such as the CD number, the label firm (release source), the album name, the musical composition name of a corresponding track i, ISRC (International Standardization Recording Code), and the like of the CD 10 as shown also in Fig. 2. Then, the metadata META_i is recorded following to the tag data TAG_i.

Therefore, according to the CD 10, the musical composition i in the first session is caused to correspond to the metadata META_i in the second session through the tag data TAG_i, the musical composition i can be varied by the metadata META_i thereof, that is, the musical composition i can be arranged. Moreover, when a plurality of the metadata META_i are prepared to the one musical composition i, it is possible to listen to the same musical composition i by a different arrangement.

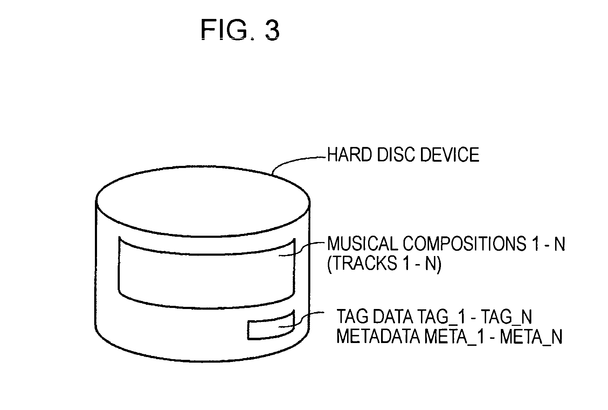

Further, according to the CD 10, it is possible to listen to the musical composition i without arrangement so that the CD 10 can be used in a simple body likewise an ordinary CD. Further, as shown also in Fig. 3, the musical composition i, the metadata META_i and the tag data TAG_i of the CD 10 may be used after they are moved to, for example, a hard disc device of a personal computer. Further, it is also possible to distribute or release the metadata META_i and the tag data TAG_i to listeners having bought the musical composition i through the Internet, home page, and the like.

Note that the tag data TAG_i and the metadata META_i can be included in a TOC (Table Of Contents) of a CD or may be included in a text portion of a CD test as a part of fringe data.

### [2] Recording Apparatus and Recording Method

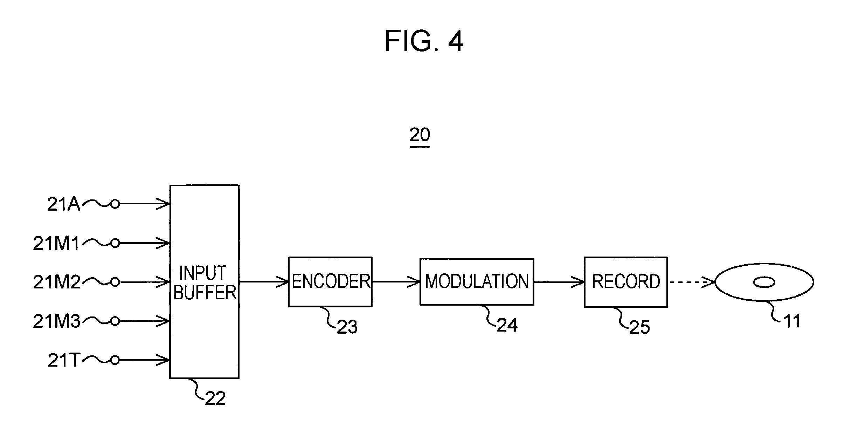

Fig. 4 shows an example of a recording apparatus according to the present invention. The example shows a case in which musical compositions and their metadata are recorded to a CD as described above in the item [1]. Further, the example shows a case in which three types of metadata META_i1 - META_i3 are prepared to one musical composition i.

That is, in Fig. 4, a reference numeral 20 shows the recording apparatus in its entirety, and the digital audio data of the musical composition i is supplied to an input buffer circuit 22 through an input terminal 21A and accumulated therein temporarily. Further, the metadata META_i1 - META_i3 and tag data TAG_i of the musical composition i are supplied to the input buffer circuit 22 through input terminals 21M1 - 21M3 and 21T and accumulated therein temporarily. Note the data can be accumulated for a plurality of musical compositions as well as respective data may be accumulated in any arbitrary order.

When predetermined operation is carried out at the time necessary data is accumulated to the input buffer circuit 22, the digital audio data of the musical composition i is fetched from the input buffer circuit 22, the fetched digital audio data is supplied to an error correction encoder circuit 23 and encoded therein, and the encode signal thereof is supplied to a recording EFM (Eight to Fourteen Modulation) modulation circuit 24 and made to an EFM signal. Then, the EFM signal is supplied to a recording unit 25 having a recording amplifier and a recording head and recorded to a first session of a recording medium, for example, a CD-R (CD Recordable) 11. Note that, in a label firm, the recording medium acts as a master disc.

Subsequently, the metadata META_i1 - META_i3 and the tag data TAG_i of the musical composition i are fetched from the buffer circuit 22, the fetched data are supplied to the recording unit 25 after they are processed by the encoder circuit 23 and modulation circuit 24 likewise the digital audio data and recorded to a second session of the CD-R 11.

Therefore, according to the recording apparatus 20, the CD-R 11 can be formed similarly to the CD 10 explained in the item [1]. Further, since the plurality of metadata META_i1 - META_i3 are prepared to the one musical composition i at the time, it is possible to listen the same musical composition i by a different arrangement. Further, according to the CD-R 11, it is possible to listen to the musical composition i without arranging it.

### [3] Replay Apparatus and Replay Method

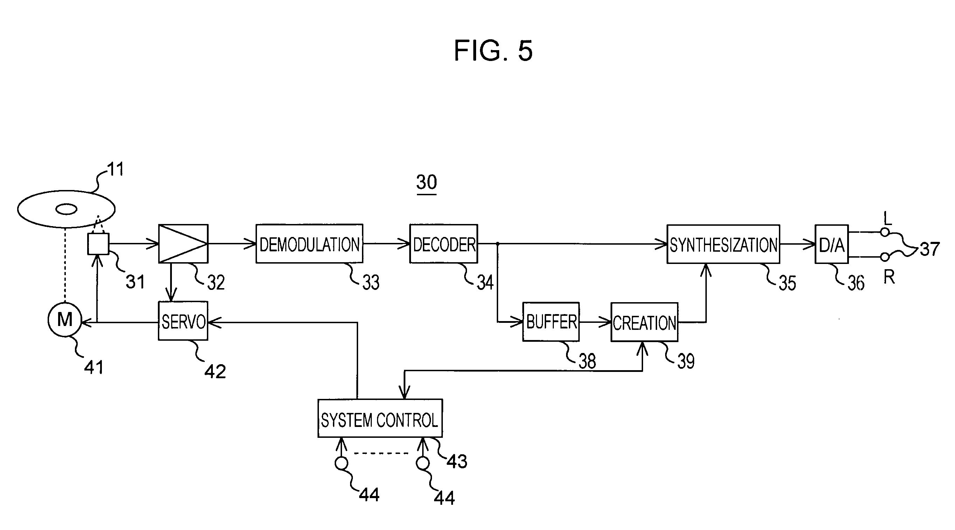

Fig. 5 shows an example of a replay apparatus corresponding to the recording apparatus 20 of the item [2]. That is, in replay apparatus 30, the CD-R 11 is rotated by a spindle motor 41 at a predetermined speed, and the EFM signal is replayed from the CD-R 11 by an optical head 31 and fetched through a replay amplifier 32.

Then, the fetched EFM signal is supplied to a servo circuit 42, and a servo output therefrom is supplied to the spindle motor 41. As a result, the CD-R 11 is controlled to a predetermined revolution speed as well as another servo output is supplied to the optical head 31, thereby thread servo, tracking servo, and focus servo are carried out to the CD-R 11. Note that, at the time, a system control circuit 43 is composed of a microcomputer to control replay of the CD-R 11. For example, when, for example, an operation button 44 is depressed, a target track is selected from the tracks (musical compositions) of the CD-R 11.

Then, ordinary replay or replay added with the backing is carried out as described below.

### [3-1] Ordinary Replay

In this case, the EFM signal fetched from the replay amplifier 32 is supplied to an EFM decode circuit 33 and the original encode signal is decoded, and then the encode signal is supplied to an error correction decoder circuit 34 and the original digital audio data is decoded. Then, the decoded digital audio data is supplied to a D/A(Digital to Analog) converter circuit 36 through a synthesization circuit 35 to be described later and converted into analog audio signals L, R, and the signals L, R are fetched from an output terminal 37.

Accordingly, the musical composition i recorded to the first session of the CD-R 11 can be ordinarily replayed. [3-2] Replay Provided with Backing (Arranged Replay) In this case, the metadata META_ij and the tag data TAG_i of a target musical composition i are replayed out of the metadata and the tag data recorded to the second session and fetched from the decoder circuit 34, and the fetched metadata META_ij and the tag data TAG_i are supplied to a buffer circuit 38 and accumulated therein temporarily.

Subsequently, the digital audio data of the target musical composition i is fetched from the decoder circuit 34 likewise the item [3-1] and supplied to the synthesization circuit 35. At the time, the metadata METij accumulated in the buffer circuit 38 is fetched in synchronism with the digital audio data of the musical composition i fetched from the decoder circuit 34. Note that, they are fetched in synchronism with each other using the tag data TAG_i.

Then, the metadata METij fetched from the buffer circuit 38 is supplied to a creation circuit 39. The creation circuit 39 is composed of, for example, a DSP (Digital Signal Processor) and creates the digital audio data of the backing of the musical composition i from the metadata METij (j=1-3) supplied thereto. When, for example, metadata META_i1 is a data for providing the musical composition i with the backing made by the guitar, the digital audio data of the backing made by the guitar is created.

Note that, at the time, when the operation button 44 is depressed, the creation circuit 39 is controlled by the system control circuit 43 so that the metadata META_ij is selected, and the digital audio data of the backing shown by the selected metadata is created.

Further, when the metadata selected from the metadata META_ij includes data designating not to modify a tempo, data showing the tempo is supplied to the system control circuit 43. As a result, the servo circuit 42 is controlled by the control circuit 43, thereby the revolution speed of the CD-R 11 is modified and thus the speed (tempo) of the digital audio data replayed from the CD-R 11 is modified.

Then, the digital audio data of the backing created by the creation circuit 39 is supplied to the synthesization circuit 35 and synthesized with the digital audio data of the original musical composition i. Note that, when the speed (tempo) of the digital audio data replayed from the CD-R 11 is modified at the time as described above, since the interval of the musical composition i modified, it is corrected to an original interval by the synthesization circuit 35. It is needless to say that the modified interval can be returned to the original interval and can be increased or decreased as a result of arrangement.

As described above, the digital audio data of the musical composition i arranged according to the metadata META_ij is fetched from the synthesization circuit 35, and the analog audio signal L, R thereof are fetched from the output terminal 37.

Therefore, according to the replay apparatus 30, when the CD 10 explained in the item [1] or the CD-R 11 is replayed, it can be replayed together with the backing. Further, when the plurality of metadata META_i1 - META_i3 are prepared to the one musical composition i at the time, it is also possible to listen to the same musical composition i with a different arrangement.

Note that although one metadata is selected from the plurality of metadata META_ij in the embodiment described above, the present invention is not limited thereto and a plurality of metadata may be arranged in combination. It is possible, as an arrangement, to, for example, add a backing of the rhythm of bossa nova by META_i1 using the guitar, to increase a replay tempo 10% by META_i2, and to increase the interval of the musical composition three degrees as compared with the original interval by META_i3.

### [4] Recording Apparatus and Recording Method (2)

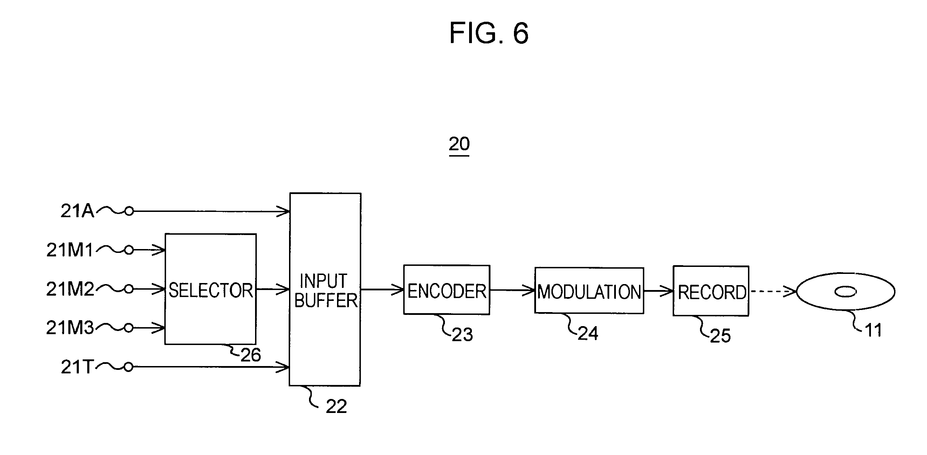

Fig. 6 shows other example of the recording apparatus 20, in which one of the three metadata META_i1 - META_i3 is recorded to a CD-R 12.

That is, the digital audio data of the musical composition i is supplied to an input buffer circuit 22 through an input terminal 21A and accumulated therein temporarily. Further, the metadata META_i1 - META_i3 of the musical composition i is supplied to a selector circuit 26 through input terminals 21M1 - 21M3, one of the metadata is selected in response to an instruction of a user, and the selected metadata is supplied to the input buffer circuit 22. Further, the tag data TAG_i of the musical composition i is supplied to the input buffer circuit 22 through an input terminal 21T.

Thereafter, the digital audio data, the metadata META_ij, and the tag data TAG_i of the musical composition i are recorded to the CD-R 12 in the CD Extra mode likewise the item [2].

Accordingly, when several kinds of arrangements are made in the recording apparatus 20, it is possible to specify a most favorite arrangement in these arrangements, to select the metadata META_ij thereof, and to add it to the original musical composition i.

Note that it is also possible to carry out replay by the replay apparatus 30 shown in Fig. 5 also in the recording apparatus 20 as well as to carry out the relay to which the backing is added.

### [5] Recording Apparatus and Recording Method (3)

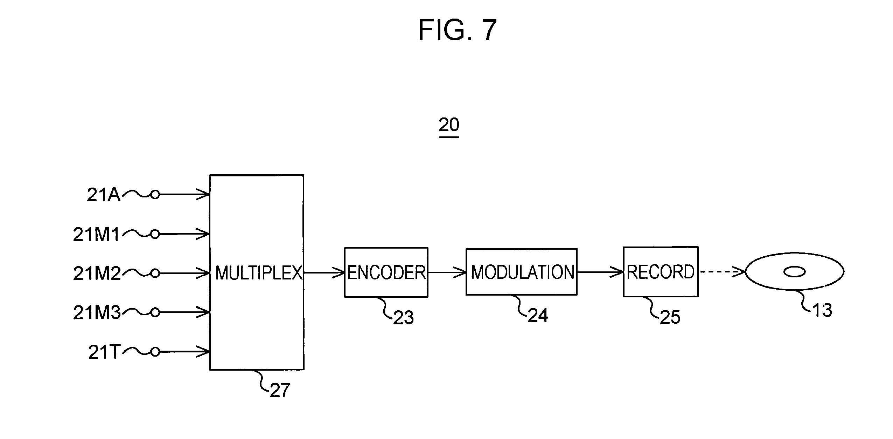

Fig. 7 shows other example of the recording apparatus 20, wherein the metadata META_i1 - META_i3 and the tag data TAG_i are multiplexed to the digital audio data of the musical composition i and recorded to a CD-R 13 in a CD-ROM mode.

Accordingly, in the recording apparatus 20, the digital audio data of the musical composition i is supplied to a multiplex circuit 27 through an input terminal 21A. Further, the metadata META_i1 - META_i3 are supplied to the multiplex circuit 27 through input terminals 21M1 - 21M3 as well as the tag data TAG_i is supplied to the multiplex circuit 27 through an input terminals 21T. As described above, the digital audio data, the metadata META_ij, and the tag data TAG_i of the musical composition i are multiplexed in the multiplex circuit 27.

Thereafter, the multiplexed signal of them is recorded to the CD-R 13 in the CD-ROM mode after it is subjected to error correction encode processing and modulation processing likewise the item [2].

Accordingly, it is possible to carry out replay by the replay apparatus 30 described next also in the recording apparatus 20. Further, in this case, it is possible to carry out replay to which the backing is added.

### [6] Replay Apparatus and Replay Method (2)

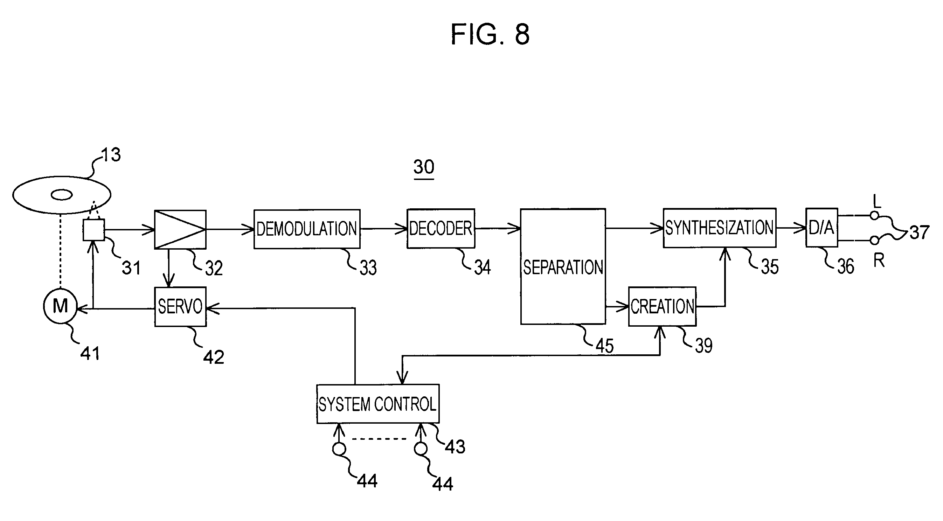

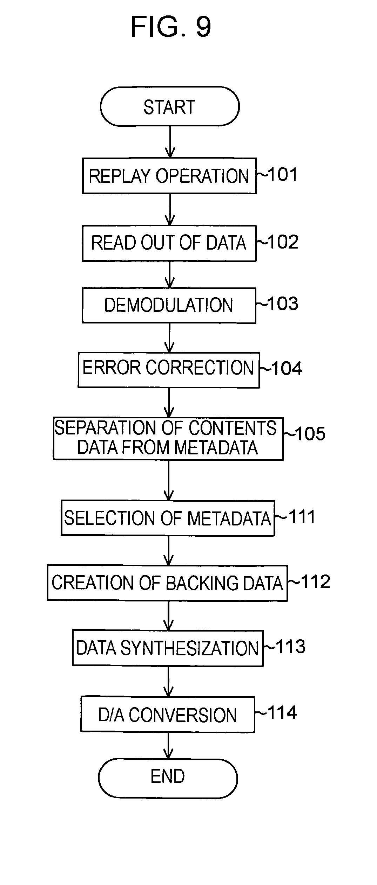

Fig. 8 shows an example of a replay apparatus corresponding to the recording apparatus 20 of the item [5], and Fig. 9 is a flowchart showing a flow of processing in replay. That is, when a replay button of actuation buttons 44 is depressed in the replay apparatus 30 at the time actuation of the replay button is waited (step 101), an EFM signal is replayed from the CD-R 13 likewise the item [3] (step 102).

The EFM signal is supplied to a demodulation circuit 33 through a replay amplifier 32 and an original encode signal is decoded (step 103) and supplied to an error correction decoder circuit 34, thereby an original multiplexed signal is decoded (step 104).

Then, the decoded multiplexed signal is supplied to a separation circuit 45, the digital audio data, the metadata META_ij, and the tag data TAG_i of the musical composition i are separated from each other (step 105), and the separated digital audio data is supplied to a synthesization circuit 35.

Further, an arbitrary metadata META_ij is selected from the metadata META_ij separated in the separation circuit 45 (step 111), the selected metadata META_ij and the tag data TAG_i are supplied to a creation circuit 39, and the digital audio data of the backing of the musical composition i is created (step 112) and supplied to the synthesization circuit 35.

Then, the synthesization circuit 35 synthesizes the digital audio data of the backing created by the creation circuit 39 with the digital audio data of the original musical composition i supplied from the separation circuit 45 (step 113). Note that the tag data TAG_i is used to synchronize the synthesization. Further, when the speed (tempo) of the digital audio data replayed from the CD-R 13 is modified at the time as described above, since the interval of the musical composition i modified, it is corrected to the original interval by the synthesization circuit 35. The modified interval can be made to the original interval and can be increased or decreased as a result of arrangement also in this example.

As described above, the digital audio data of the musical composition i, which is arranged according to the metadata META_ij, is fetched from the synthesization circuit 35 and supplied to a D/A converter circuit 36 so that it is converted into analog audio signals L, R (step 114), and the audio signals L, R are fetched from the output terminal 37.

Therefore, according to the replay apparatus 30, when the CD-R 13 explained in the item [5] is replayed, it can be replayed together with the backing.

Note that a plurality of metadata may be arranged in combination also in the example in addition to that one metadata is selected from the plurality of metadata META_ij.

### [7] Database Server

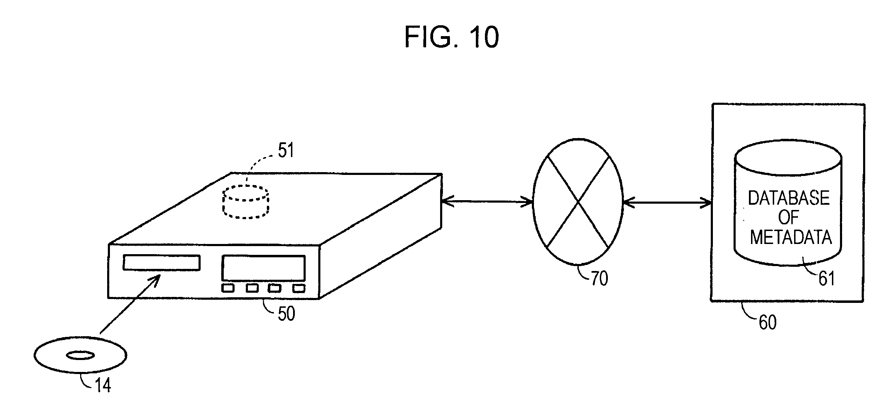

Fig. 10 shows an example when a database server 60 is used. That is, in the example, the musical composition i is replayed from an ordinary CD 14 as well as the metadata META_i and the tag data TAG_i of the musical composition i are accommodated to the database server 60 and used through a network.

For this purpose, a dedicated CD player 50 is prepared to replay the CD 14. The CD player 50 has a signal system arranged as shown in, for example, Fig. 5 as well as has a hard disc device 51 and a communication function. The CD player 50 is connected to the database server 60 through the network, for example, the Internet 70. Note that, the CD 14 is an ordinary CD-DA.

Further, a database 61 is prepared to the database server 60, and the metadata META_1 - META_N and tag data TAG_1 - TAG_N of the musical compositions 1 - N are accumulated to the database 61.

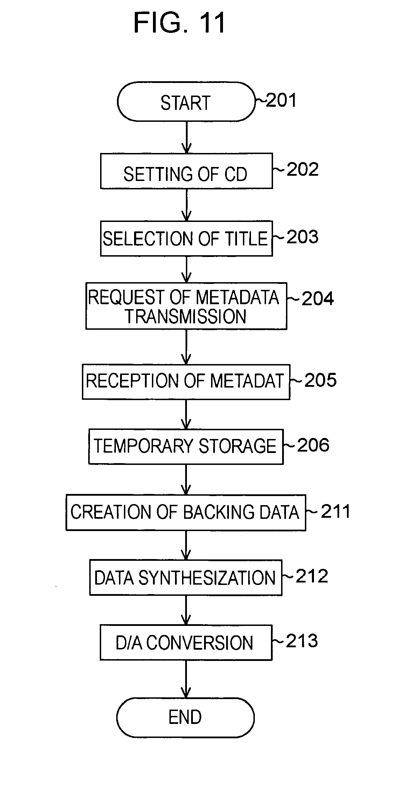

First, the CD 14 is set to the player 50 according to an operation/processing procedure shown in, for example, Fig. 11 (step 202), and a title is selected (step 203). Thus, the data of a CD number and a track number are fetched from the CD 14 and transmitted to the server 60 through the Internet 70, thereby the server 60 is requested to return the metadata META_i and the tag data TAG_i of a corresponding musical composition i (step 204).

As a result, the server 60 fetches the corresponding metadata META_i and tag data TAG_i from the database 61 and transmits them to the CD player 50 through the Internet 70. Note that, in this case, when the musical composition i has a plurality of metadata META_i, all of the metadata META_i or only the metadata designated by a user can be downloaded.

Then, the CD player 50 receives the metadata META_i and the tag data TAG_i transmitted thereto (step 205), and they are stored to the hard disc device 51 temporarily (step 206). Subsequently, the digital audio data of the title selected at step 203 is replayed from the CD 14 and supplied to the synthesization circuit 35 as well as the metadata META_i and the tag data TAG_i stored in the hard disc device 51 are supplied to the creation circuit 39 (Fig. 5), the digital audio data of a backing of the musical composition i is created (step 211), and the created digital audio data of the backing is supplied to the synthesization circuit 35.

The synthesization circuit 35 synthesizes the digital audio data of the backing created by the creation circuit 39 with the digital audio data of the original musical composition (title) i supplied thereto (step 212). Note that the tag data TAG_i is used to synchronize the synthesization.

As described above, the digital audio data of the musical composition i, which is arranged according to the metadata META_i, is fetched from the synthesization circuit 35 and supplied to the D/A converter circuit 36, in which the digital audio data is converted into analog audio signals L, R through digital to analog conversion (step 213), and the audio signals L, R are fetched from the output terminal 37.

Therefore, according to the CD player 50, when the ordinary CD 14 is replayed, it can be replayed together with the backing.

Note that, the data of the musical composition as a material is obtained by replaying the CD 14 in the example according to Figs. 10, 11, the present invention can be also applied even to a case in which the data of the material is obtained through the network as in a service for electronically distributing musical compositions.

### [8] Metadata Exchange System

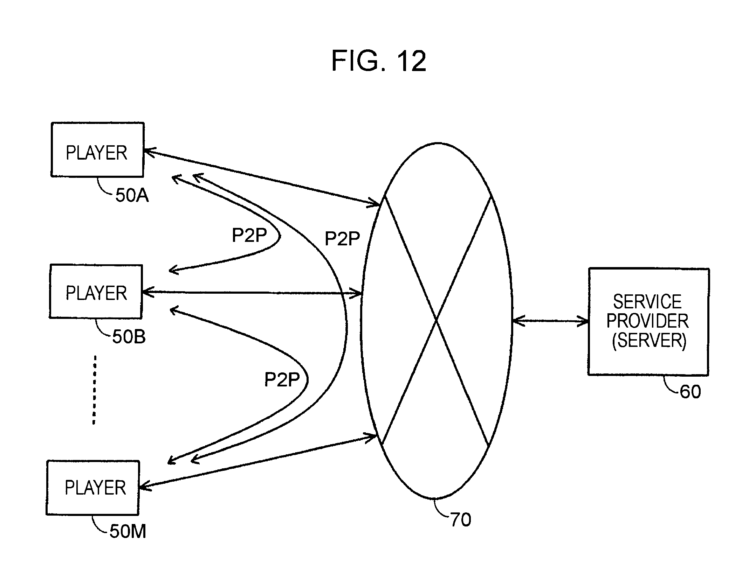

Fig. 12 shows a case in which the metadata META_i can be exchanged between a plurality of users. That is, CD players 50A - 50M arranged likewise the CD player 50 of Fig. 10 are connected to the Internet 70 as well as a server 60 is provided by, for example, a label firm and connected to the Internet 70. In this case, the label firm provides various types of the metadata META_i and the tag data TAG_i of the CDs released by it.

Accordingly, users can be distributed with default metadata META_i from the server 60 of the label firm through the Internet 70 as well as can exchange the metadata META_i with other users by P2P through the Internet 70. Otherwise, the users can exchange the metadata META_i through a recording medium such as a memory card.

Further, the label firm can be actively involved with musical compositions, that is, contents by analyzing required metadata META_i.

### [9] Arrangement of Video/Image Data

Although a target of arrangement is a musical composition in the above description, the target of arrangement may be set to video/image data of motion pictures, TV broadcastings, games, and the like.

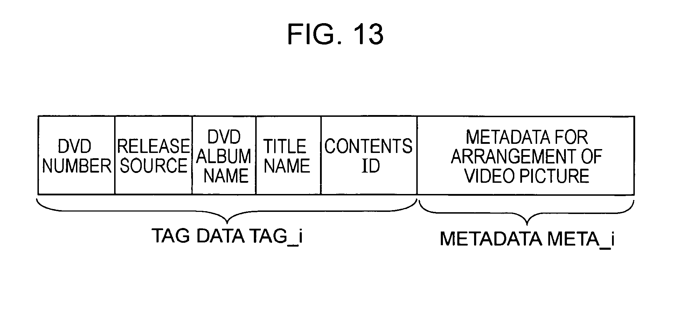

Fig. 13 shows an example of a format of metadata META_i and tag data TAG_i when a video accommodated in a DVD is arranged. Tag data TAG_i includes data such as a DVD number, a label firm, an album name, a title name, a contents ID (IDentification), and the like likewise the case in which musical compositions are accommodated to a CD also in this case.

Then, the tag data TAG_i is followed by the metadata META_i. The arrangement for a character animation such as an actually recorded image/video, CG (Computer Graphics), and the like, which is carried out by the metadata META_i, includes filter processing such as color tone correction, edge enhancement, addition of noise and the like, modification and processing of gradation to a part or the entirety of a screen or to a specific target, modification of a display region carried out by zooming and panning, superimposing of characters and figures, extraction and addition of a scene, synthesization with other video and image, modification of a replay specification, and the like In particular, in the character animation, it is possible to modify the curve of the animation (a value corresponding to a key frame), which acts on a special position, a shape, and material quality, modification of a texture to be applied in addition to the above mentioned. Further, in three-dimensional CG, it is also possible to modify the parameter of a light source and to add fog.

In the arrangement to these images, it is contemplated that the replay tempo of a musical composition corresponds to the replay speed of images, the pitch of the musical composition corresponding to the color and the shape of the images, the melody of the musical composition corresponding to the color tone of the images, and the sounds of various musical instruments correspond to the shapes and the colors of CG characters and the images, respectively in comparison with the arrangement of the music contents described above.

Therefore, according to the metadata META_i and the tag data TAG_i, a corresponding video/image data can be arranged.

### [10] Conclusion

According to the system described above, not only materials such as musics, videos, and the like themselves can be enjoyed but also a result of arrangement of the materials carried out using various types of additional data prepared by users can be also enjoyed, thereby musics and videos can be appreciated in various states.

Further, when information, which provides the result of arrangement, is furnished to friends and the like, they can also enjoy the result of the arrangement when they have the contents of the same music and video. Otherwise, it is also possible to store the information that provides the result of arrangement to a server and to distribute it through a distribution service, P2P, and a recording medium such as a memory card, thereby the information can be variously enjoyed because users can be actively involved with the materials.

Moreover, the information that provides the result of the arrangement has a meaning only when a user making use of it prepares a material (contents data) for using it, which makes a great advancement in copy right as well as can contribute to turnover.

### [11] Others

Although it is assumed in the above description that uncompressed digital audio data are recorded to the CD 10 or the CD-Rs 11 - 13 as the contents data, digital audio data, which are obtained as a result of compression of the uncompressed the digital audio data by a MP3 (MPEG (Motion Picture Experts Group)-1/Audio Layer 3) system and the like, may be recorded. Further, the material or the contents data as the target is not limited to the musical composition (sound), and, it may be contents such as an image (photograph, CG), a video image (video, animation), a game and the like, and a character and a voice can be converted in the game.

The contents may be identified from, for example, several seconds of digital data and the like at the leading end of the contents in place of identifying them by the tag data. An optical disc, a hard disc, a semiconductor memory, a network, and the like may be used as the medium of the contents, the metadata, and the tag data. Further, in the CD, the metadata and the tag data may be included in fringe information.

Further, in the item [7] and the like, it may be charged to download the metadata META_i and the tag data TAG_i of the musical composition i. As a method of the charge, a charge may be made each time a set of the metadata META_i and the tag data TAG_i is downloaded or a fee may be varied according to the number of the metadata META_i and the tag data TAG_i. Further, a monthly flat-rate fee may be charged as a service fee.

Further, in the case described above, although the metadata META_i and the tag data TAG_i are distributed through a disc to which the contents data are recorded or through the network, they may be exchanged or distributed through broadcasting, a CATV (CAble TeleVision), a mobile phone, and a recording medium. Since the exchange/distribution of the metadata provides a method of actively enjoying musics and pictures, the method may become widely used explosively.

At the time, there is a possibility that a kind of communities is created. There is a possibility, for example, that communities are created according to applications and categories such as a jazz community, a classic community, a tempo community, an arrangement community, a parody (lyrics) community, a drama community, a sports program community, an action game community, a game character community, and the like.

## Claims

1. A recording medium, **characterized in that** identification data for specifying contents data and metadata for modifying the contents data are recorded in correspondence to each other.

2. A recording medium according to claim 1, **characterized in that** contents data specified by the identification data are also recorded.

3. A recording medium according to claim 2, **characterized in that** the identification data and the metadata are recorded to a recording region different from the contents data.

4. A recording medium according to claim 1, **characterized in that** the contents data are at least one data of a video, a music, a photograph, and a game.

5. A recording medium according to claim 1, **characterized in that** a plurality of kinds of the metadata are recorded.

6. A recording medium according to claim 1, **characterized in that** the recording medium is an optical disc, a hard disc, or a semiconductor memory.

7. A data output apparatus comprising:
read-out means for reading out predetermined contents data from a recording medium or through a network;
fetch means for specifying the read-out contents data and fetching metadata related to the contents data for modifying the contents data from the recording medium or other recording medium or through a network; and
output means for outputting the contents data read out by the read-out means and the metadata fetched by the fetch means together.

8. A data output method comprising:
a read-out step for reading out predetermined contents data;
a fetch step for fetching metadata for modifying the contents data; and
an output step for outputting the contents data read out at the read-out step and the metadata fetched at the fetch step together.

9. A data delivery/distribution system, wherein information for specifying predetermined contents data and metadata for modifying the contents data are delivered or distributed together.

10. A data delivery/distribution system according to claim 9, **characterized in that** the metadata is data of a difference.

11. A data delivery/distribution system according to claim 9, **characterized in that** the metadata is data for providing at least one modification of a modification of gradation, a modification of a color tone, a modification of a time axis, a modification of a frequency, a modification of a volume, a modification of a tempo, and a shift of a pitch.

12. A data delivery/distribution system according to claim 9, wherein the metadata is delivered or distributed through broadcasting, the Internet, a mobile phone, or a recording medium.

13. A recording apparatus, **characterized in that** the recording apparatus records identification data for specifying contents data and metadata for modifying the contents data in correspondence to each other.

14. A recording method, **characterized in that** the recording method records identification data for specifying contents data and metadata for modifying the contents data in correspondence to each other.
